# EUROPEAN PATENT APPLICATION

(11) **EP 1 482 238 A2**
(43) Date of publication of application: **01.12.2004**
(21) Application number: 04102326.8
(22) Date of filing: 26.05.2004
(51) Int. Cl.: F16P 3/14, E21B 7/02, E21B 44/00

(54) **Safety device for operating machines, particularly drilling machines or suchlike, and method to recognize the presence of persons, using such safety device**

(30) Priority: 29.05.2003 IT UD20030118
(71) Applicant: CASAGRANDE SpA, I-33074 Fontanafredda (PN) (IT)
(72) Inventor: Del Ben, Stefano, 33170 Pordenone (IT)
(74) Representative: Petraz, Gilberto Luigi

(57) **Abstract**

Safety device for an operating machine (11), comprising visual recording means (15) to acquire digital images of a pre-determined area (17) surrounding an operating member (12) of the operating machine (11), and processing means to receive and process the digital images acquired by the visual recording means (15) in order to discriminate the movement of shapes in the area (17) and to send intervention signals to the command system of the operating machine (11) in the event that a condition of danger is detected. The visual recording means comprise two digital visual means (25a, 25b) arranged reciprocally at a much smaller distance with respect to the size of the area (17) to be controlled. The two visual means (25a, 25b) are oriented in the same direction and determine the distance of the object identified from the view point with respect to a background plane (30b) in order to recognize whether the object is moving or stationary.

## Description

### FIELD OF THE INVENTION

The present invention concerns a device and a method to recognize the presence and/or approach of one or more persons, or voluminous objects, in correspondence with the working members, for example the drilling members, of an operating machine such as an excavating machine or suchlike.

The invention is applied preferentially, but not exclusively, to small or medium size drilling machines, to buckets, drills, milling cutters, pile-driving machines, machines for making wells or diaphragms, or other machine having similar or comparable characteristics.

### BACKGROUND OF THE INVENTION

It is known that drilling machines, or more generally operating machines equipped with working members to drill, break or crush the ground, are equipped with accident-prevention safety systems which serve to prevent accidents and injuries due to accidental contact of parts of the body of the operators with the members of the machine.

One safety system adopted in the state of the art provides to use one or more cables, arranged in a position surrounding the working member of the machine, which include sensors to detect any contact occurring in correspondence with the constraining points arranged at the ends of the cables. To be more exact, when an operator enters an area surrounding the working member delimited by said cables, and knocks against them, this contact is detected by the sensors which automatically stop the rotation of the working member, thus preventing danger of accidents for the operator.

Although this system is theoretically valid, it has proved itself to be inconvenient in practice, because every time the operator has to access the area surrounding the drilling member, even when the machine is inactive, he can accidentally knock the cables, which entails considerable waste of time and operating difficulties.

Since interventions on the working members, for example to insert new piles or rods, or to change and/or perform maintenance on the tool, can be very frequent in the course of one day, the operators often remove the cables completely at the beginning of their work, thus depriving the machine of the safety system. This entails considerable risks for the safety of the operators themselves, and also an infringement of the regulations which can lead to sanctions being applied in the event of an inspection.

In the state of the art, visual control systems are known, which use one or more TV cameras oriented towards an observation area and which signal the introduction of a person inside said observation area. Examples of such devices are described in the documents WO-A-02/07086, EP-A-1.061.487 and US 2003/030723.

Known devices are normally designed for applications in the field of a building, for example a house, a bank, a place of business, in order to detect the presence of shapes inside a particular area, for example to signal the entrance of an intruder in an area controlled or to be protected.

Given their field of application, known devices are not particularly developed, and hence effective, in terms of response times, sensitivity of detection, protection from destructive agents, for example atmospheric agents, resistance to knocks and mechanical stresses, precise discrimination of signals that need an intervention or not, and for other reasons.

In the field of operating machines, particularly drilling or digging machines, the factors indicated above are extremely important, both to ensure high guarantees of safety for people, respecting the extremely strict legislation in this field, and also to prevent unnecessary interruptions in the functioning of the machine, and also to ensure efficient functioning substantially under all environmental conditions.

In fact, it must be considered that such machines operate in external environments, and therefore are subject to every type of atmospheric agent, they work ground which may be very different, they raise a great quantity of dust, rocks, stones and otherwise that must be recognized and discriminated so as not to cause the immediate stoppage of the tool, as must happen, on the contrary, when there is a person moving in the working area.

For all these reasons, it has been found that observation devices known in the state of the art were not satisfactory for application in safety devices to be applied on operating machines, particularly digging or drilling machines.

The purpose of the invention is therefore to achieve a safety device to be applied to excavating machines or suchlike which, while ensuring a high level of accident prevention, and respecting the legislation in force, does not entail any obstacle to the operating abilities of the workmen and which does not entail particular additional time and/or inconveniences in order to access the area surrounding the working member of the machine, when the latter is inactive.

Another purpose of the invention is to achieve a safety device that is simple to install and can be applied, substantially without any limitations, to any type and size of operating machine.

Another purpose is to achieve a safety device with great efficiency and sensitivity in detection, with minimum response times, and resistant to knocks, stresses, atmospheric agents and disturbing agents in general.

The Applicant has devised, tested and embodied the present invention to overcome the shortcomings of the state of the art and to obtain these purposes and advantages.

### SUMMARY OF THE INVENTION

The present invention is set forth and characterized essentially in the main claims, while the dependent claims describe other innovative characteristics of the invention.

The safety device according to the invention comprises as essential elements:
- visual recording means, able to acquire digital images of a pre-determined area surrounding the operating member of the machine with respect to which they are oriented, and
- processing means able to receive and process the images acquired by the visual recording means in order to discriminate the presence or absence of persons or voluminous objects in said pre-determined area and to send intervention signals to the command system of the machine in the event that a condition of danger is detected.

According to the invention, the visual recording means consist of two distinct digital visual means very close to each other, that is, located reciprocally at a much smaller distance with respect to the size of the area to be controlled.

The two visual means are oriented in the same direction, in this way simulating the visual system of the human eye, and thus allow to determine, by comparing the two images taken, the distance of the objects from the view point.

By using two visual means very close to each other, which send their image to a processing unit, the following advantages are obtained:
- it is possible to determine whether the object identified is on the background plane (plane of the background image), or at a different distance, thus succeeding in distinguishing shadows and variations in the light from objects which are actually moving inside the controlled area;
- since the two visual means are located at a much smaller distance with respect to the size of the area to be controlled, the area is always and simultaneously viewed and controlled by both visual means, thus guaranteeing a sure control and preventing, in particular working situations, a person entering into the observation area from being hidden and visible to only one of the two visual means.

Known viewing systems, based on the recognition of shapes, which use several TV cameras, need for said cameras a critical positioning and a distance between them comparable to the size of the area to be controlled. In this case, in fact, the two visual means must look at the area from two different sides (for example from above and from the side) and use the two view points to obtain two "views" of the object and hence to improve the reliability of the recognition of the shape. This method, apart from not being applicable on movable machines, such as drilling machines or digging machines, wherein the present invention is applied, can be affected by the presence of obstacles which cover the view of one of the two visual systems.

Moreover, according to the invention, by using the two visual means close to each other, two very similar images of the protected area are obtained, and it is thus possible to compare them and determine possible breakdowns in the visual system, for example of one or the other of the visual means.

In a preferential embodiment of the invention, the processing means are able to discriminate the presence of human forms in said pre-determinate area with respect to other objects and/or masses in general, in order to interrupt, or in any case condition, the functioning of the machine only in the event of real danger for the safety of the operators. This makes possible not to stop or slow down the machine when certain objects or materials are found in the area controlled by the visual recording means, for example detritus, stones, mud, rain, snow, trees, walls or otherwise.

In a preferential embodiment, the processing means are arranged to perceive the movement of a shape having a certain size and more than a minimum value, inside the observation area. To be more exact, the processing unit is suitable to acquire and process a high number of photograms per second, for example acquiring more than 20 frames a second and processing more than 6 frames a second, verifying the presence of objects moving inside the control area by means of an algorithm which analyzes the variations in the image with respect to a pre-determined background image.

The steps of processing the images, carried out in the method according to the invention, comprise:
a) recognizing whether the object filmed by the two visual recording means inside the observation area is stationary or moving;
b) verifying whether the size of the object is more than a minimum value;
c) verifying whether the object is moving inside two adjacent zones into which said area is divided;
d) determining whether the speed of movement of the object, in relation to the speed at which the image is captured, is inside a pre-set range of values;
e) determining whether the direction of movement of the object is oriented from the outside towards the inside of said area.

These steps can be carried out in any order, although it is preferential to follow the order indicated above.

Only when all the steps indicated above supply a positive reply is a signal of risk signaled and an intervention activated on the operating machine, for example slowing down or stopping the drilling tool.

According to a variant, the processing means are of the programmable type in order to allow to personalize the discrimination performed by the processing means according to particular and/or contingent working conditions. Such programming allows on each occasion to make the safety system intervene only when there is a real condition of danger for persons, and not, for example, when the machine is operating near fixed obstacles, or when the area under observation by the TV camera is affected by the material thrown up by the excavation.

According to another variant, the size and/or shape of the area under observation by the TV camera can be programmed on each occasion.

According to another variant, the area under observation by the TV camera can be divided into two or more zones, adjacent to each other and located at different distances from the working member, so as to be able to differentiate the intervention on the functioning of the machine according to the zone in which the human presence has been detected. For example, a first zone farther from the working member can be linked only to a slow-down in the working member and a possible acoustic and/or visual alarm signal; on the contrary, a zone nearer the working member can be linked to an immediate stoppage of the working member.

A first advantage of the present invention is that the zone surrounding the working member is substantially free, so that, when the machine is inactive, it is completely accessible to the operators for any type of operation or intervention.

Another advantage of the present invention is that, since it is based on the perception of movement rather than the simple recognition of the presence of a human shape, it is possible to substantially reduce the processing of the image, a considerable reduction of the response times is obtained and, more particularly, the incidence of false alarms that cause unjustified stoppages of the machine, and long downtimes before restarting, is reduced.

Another advantage is that the visual recording and processing system of the present invention can be installed, without particular limitations, substantially on any machine whatsoever without requiring particular constraints of assembly and/or positioning. It is advantageous, however, to provide a sufficiently safe and protected place for the assembly, possibly using also protection elements transparent to optical rays and/or anti-vibration supports.

Another advantage of the present invention is that it allows a total personalization of the intervention parameters of the system, both in terms of area covered, and also in terms of selecting the discriminating elements which activate (or not) the intervention on the machine.

### BRIEF DESCRIPTION OF THE DRAWINGS

These and other characteristics of the present invention will become clear from the following description of a preferential form of embodiment, given as a non-restrictive example, with reference to the attached drawings wherein:

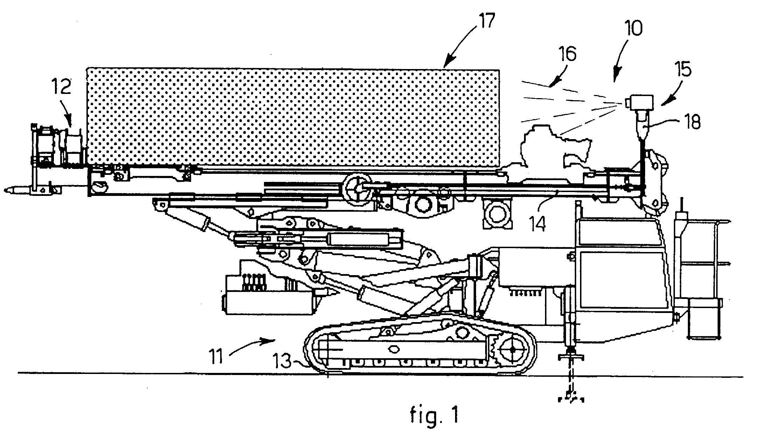

- fig. 1 is a schematic view of an excavating machine of the type with horizontal drilling, equipped with the safety device according to the invention;

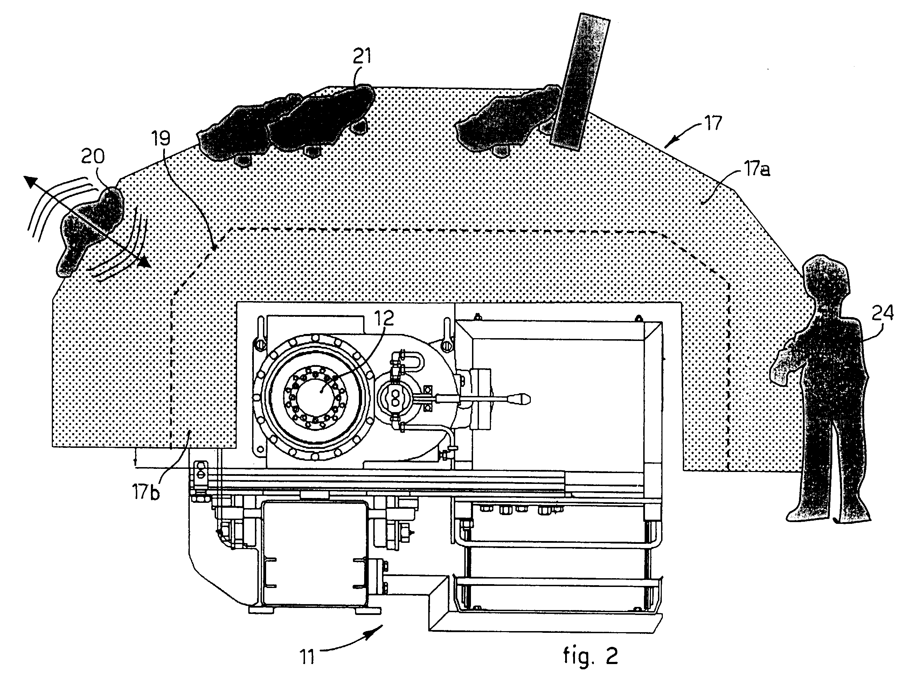

- fig. 2 is a schematic view of an excavating machine of the type with vertical drilling, equipped with the safety device according to the invention;
- figs. 3a, 3b and 3c are schematic views of some examples of use of the device according to the invention with discrimination of objects inside the observation area;

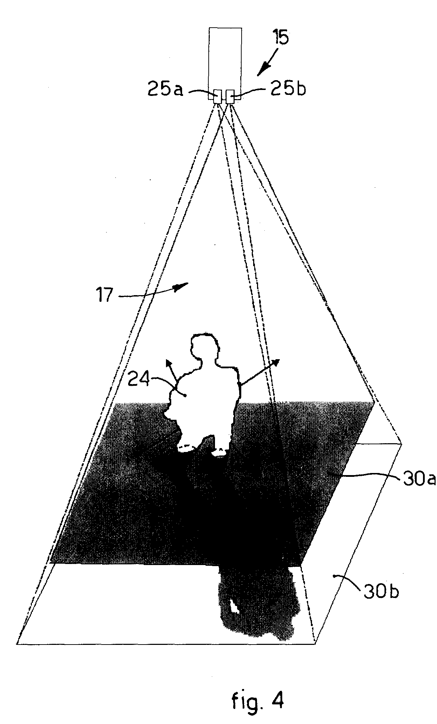

- fig. 4 is a schematic view of the functioning of the visual recording means used in the safety device according to the invention.

### DETAILED DESCRIPTION OF A PREFERENTIAL FORM OF EMBODIMENT OF THE INVENTION

With reference to the attached drawings, a safety device according to the invention, indicated generally by the reference number 10, is applied to an excavating machine 11 with a drilling member 12 of a rotary type, with buckets, milling cutters, or of the pile-driving type.

The excavating machine 11 is in itself of a substantially conventional type and comprises a tracked vehicle 13 for its displacement, and support and movement members 14 for the drilling member 12, not described in detail here as they are irrelevant for an understanding of the invention.

The safety device 10 comprises a visual recording means consisting in this case of a digital TV camera 15 comprising two digital visual means 25a and 25b positioned and oriented so that their visual range 16 covers a surrounding area 17 of a desired size around the drilling member 12.

The two visual means 25a, 25b are located very close to each other, that is, they are located at a reciprocal distance which is much less than the size of the area 17 to be controlled, and they are oriented in the same direction, substantially observing the same image from two view points that are very close together. In this way, they simulate the visual system of the human eye and allow to determine, by comparing the two images acquired by means of the processing unit, the distance of the objects from the view point with respect to a reference distance detected on a first plane 30a, or plane of movement, taken with respect to a second plane 30b, or background plane. Thanks to this comparison of the two images, the processing unit is therefore able to perceive a movement of an object with respect to the observation point, not only to detect the presence or absence of a shape.

The TV camera 15 with the two visual means 25a, 25b is preferably inserted inside a metal container, advantageously made of steel, not shown here in order to simplify the summary. Such container is advantageously of a very resistant type in order to prevent fragments or detritus from hitting and damaging the TV camera 15, and in any case to protect it from mechanical stresses of every type, such as vibrations, explosions or otherwise. The container is also advantageously equipped with an internal heat conditioning circuit in order to guarantee an efficient functioning thereof even in particularly adverse climatic conditions, for example in a range of from -30°C to +100°C.

The TV camera 15 is positioned in a place above said support and movement members 14, and is installed on a support 18, advantageously of the anti-vibration type.

The TV camera 15 comprises a microprocessor card, advantageously housed in a seating inside it, to which the digital images acquired are sent to be processed.

The whole system, both the visual detection part and the processing part, is extremely small and is entirely installed inside the protective container, both to adapt to application on the operating machine 11 without entailing problems in the correct functioning of the machine, and also to substantially reduce the response times, thus increasing the efficiency and sensitivity of detection.

It comes within the field of the invention, although as a less preferential embodiment, to provide that the system to process the images is inside the TV camera 15, and is supported by a computer mounted on board the machine or also on the ground, and connected to the TV camera 15, also by radio, in order to transmit the images.

The microprocessor card is connected to the command system of the excavating machine 11 in order to intervene on the means that drive the drilling member 12 according to the processing of the images acquired by the TV camera 15.

To be more exact, the microprocessor card can be programmed to slow down the rotation of the drilling member 12, and possibly to emit an acoustic and/or visual alarm signal, in the event that the shape of a part of the body of a person 24 is detected inside a first, outermost zone 17a, and delimited by a border 19 of said area 17.

If the processing of the images identifies the presence of a person 24 inside a second, innermost zone 17b of said area 17, the microprocessor card can be programmed to immediately stop the rotation of the drilling member 12 in order to prevent accidents.

It is clear that there can be three or more differentiated zones inside the area 17, with different and variable levels of intervention on the command system of the excavating machine 11.

In the preferential embodiment of the invention, the microprocessor card is equipped with a software able to discriminate whether inside the area 17, in one of the zones 17a or 17b, the shape of a person 24 moving with respect to the observation point is recognized, thanks to the comparison of the image detected on the planes of movement 30a and background 30b, thus determining an intervention on the commands of the drilling member, or another type of object, or another material, for example dust, rain or snow, which does not determine any intervention on the drilling member 12.

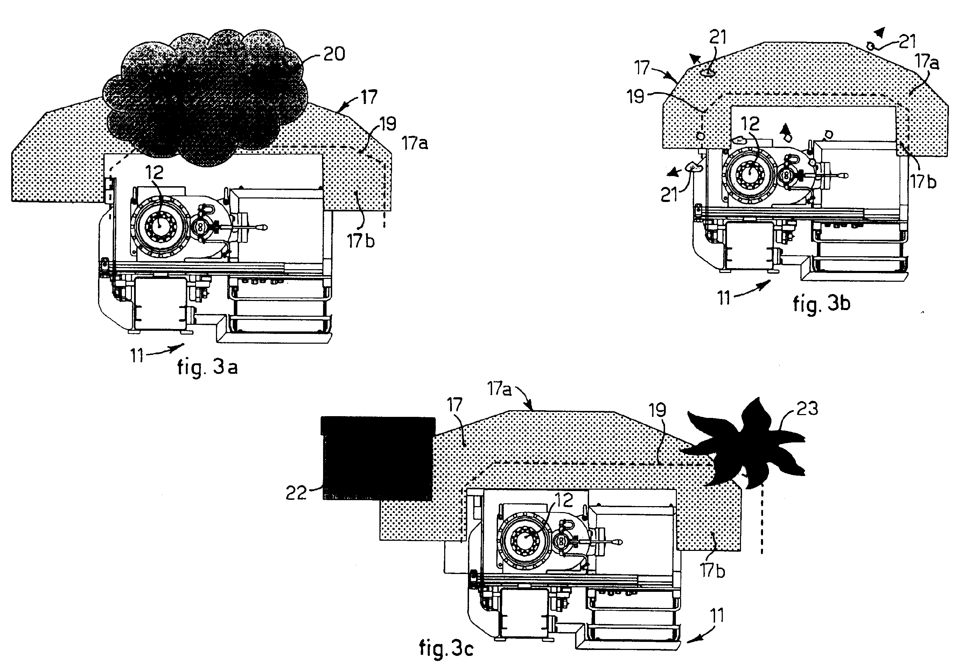

Figs. 3a, 3b and 3c show some examples of situations wherein, although the microprocessor card recognizes the presence of objects in the area 17, it does not intervene on the drilling member 12. To be more exact, fig. 3a shows the case of clouds 20 of mud or dust, fig. 3b the case of detritus, stones or pebbles 21 moved during the excavating operations, while fig. 3c shows the case wherein the excavating machine 11 is operating near fixed obstacles such as low walls 22 or trees 23.

In all these cases, the software installed on the microprocessor card recognizes that the situation is not dangerous and therefore does not start any intervention or send any signal to the command system of the machine 11.

According to the invention, recognition occurs according to the combination of a plurality of steps, comprising at least:
a) recognizing whether the object filmed by the visual recording means 15 inside said area 17 is stationary or moving; this recognition can take place effectively thanks to the fact that the two visual means 25a, 25b detect the distance of the shape identified on a plane of movement 30a with respect to a background plane 30b, taken as a reference;
b) verifying whether the size of the object is greater than a minimum value;
c) verifying whether the object is moving inside two adjacent zones into which the area 17 is divided;
d) determining whether the speed of movement of the object, in relation to the speed at which the image is captured, is inside a pre-set range of values;
e) determining whether the direction of movement of the object is from the outside towards the inside of said area 17.

In a preferential embodiment, the recognition algorithm uses these parameters in sequence in the order indicated above, using on each occasion pre-established thresholds, programmable as desired, in order to pass to the subsequent step.

For example, if from the first comparison the object identified is stationary, the procedure is interrupted and no intervention is carried out, while if the object is moving the algorithm passes to the next comparison.

If all the five steps described above give an affirmative result, then the recognition procedure concludes that the object identified is a part of the body of a person 24, moving for example with respect to the drilling member; depending on whether the observation zone is 17a or 17b, either a warning is given and the drilling member 12 is possibly slowed down, or the drive of the drilling member 12 is immediately interrupted.

The software installed in the microprocessor card also provides a filter to mask the vibrations of the excavating machine 11 during drilling, and a filter to suitably manage the zones of shadow on the ground.

All the parameters indicated above, the order followed during the recognition procedure and the relative comparison thresholds can be programmed and modified on each occasion according to contingency operating situations. For example, it is possible to modify on each occasion the type and size of the objects that determine or not an intervention on the operating members of the excavating machine 11.

The number and size of the zones 17a, 17b inside the area 17 can also be modified as desired, as can the type, the entity and the duration of the interventions on the drilling member 12 or on other parts of the excavating machine 11.

According to a variant and by means of suitable control algorithms, the system software is also able to signal the incorrect functioning of the device, as caused by the recognition that the lens of the TV camera is dirty, by the fact that there is a lack of light, that the electric feed or signal cables are broken, or that the system is blocked.

According to another variant, the system can be temporarily excluded during the steps to change the rods and/or to perform maintenance of the machine.

Modifications and/or additions of parts can be made to the safety device 10 as described heretofore, and to the relative method to recognize persons, without departing from the field and scope of the present invention. For example, it comes within the field of the invention to provide that there can be two or more TV cameras 15 used, arranged distant from each other and each one comprising two visual means located very close to each other, in order to cover respective areas, possibly intersecting, surrounding the drilling member 12. The TV camera 15 can be mounted on a movable support, possibly in a programmable manner, in order to follow possible displacements of the drilling member 12 or to be located in different positions as the operating cycle of the excavating machine 11 varies.

It is also clear that, although the present invention has been described with reference to an excavating machine 11, a person of skill in the art will be able to apply the invention to other operating machines which need a safety device similar or comparable to the one described here.

## Claims

1. Safety device for an operating machine (11) including at least an operating member (12), comprising visual recording means (15) able to acquire digital images of a pre-determined area (17) surrounding said operating member (12) and with respect to which they are oriented, and processing means able to receive and process the digital images acquired by said visual recording means (15) in order to discriminate the movement, or lack of movement, of persons, or voluminous objects, (24) in said pre-determined area (17) and to send intervention signals to the command system of the operating machine (11) in the event that a condition of danger is detected, **characterized in that** said visual recording means comprise at least two digital visual means (25a, 25b) arranged reciprocally at a much smaller distance with respect to the size of the area (17) to be controlled, said two visual means (25a, 25b) being oriented in the same direction and being able to determine the distance of the object identified from the view point with respect to a background plane (30b) in order to recognize whether the object is moving or stationary.

2. Device as in claim 1, **characterized in that** said processing means include means to discriminate the movement of forms (24) in said area (17) with respect to other objects and/or masses in general (20, 21, 22, 23), in order to condition the functioning of the operating machine (11) only in the event of danger for the safety of persons.

3. Device as in claim 1 or 2, **characterized in that** said processing means are of the programmable type in order to allow to personalize the discrimination performed by said processing means according to particular and/or contingent working conditions.

4. Device as in any claim hereinbefore, **characterized in that** said processing means are of the programmable type in order to allow to modify the size and/or shape of said area (17) observed by said visual recording means (15).

5. Device as in any claim hereinbefore, **characterized in that** said area (17) observed by said visual recording means (15) is divided into at least two zones (17a, 17b), adjacent to each other and located at a different distance from said operating member (12), in order to differentiate the intervention on said operating machine (11) according to the zone (17a, 17b) wherein the movement of a form (24) has been detected, each of said zones (17a, 17b) being functionally correlated to a different type of intervention on said operating machine (11).

6. Device as in claim 5, **characterized in that** a first zone (17a) farther from the operating member (12) is linked to a slowing down of the operating member (12) and to the signal of an acoustic and/or visual alarm, whereas a zone (17b) nearer to the operating member (12) is linked to an immediate stoppage of the operating member (12).

7. Device as in any claim hereinbefore, **characterized in that** said visual recording means (15) are arranged inside a container resistant to mechanical stresses or explosions, and equipped with a heat conditioning system to guarantee a correct functioning in the range of -30°C÷+100°C.

8. Device as in any claim hereinbefore, **characterized in that** said visual recording means (15) are arranged on an anti-vibration support (18).

9. Method to recognize the movement of persons, or voluminous objects, (24) in a pre-determinate area (17) surrounding an operating member (12) of an operating machine (11), wherein visual recording means (15) are used, oriented towards said area (17) and associated with a processing system able to discriminate whether in said area (17) there is a movement of a form (24), **characterized in that** it provides to use two digital visual means (25a, 25b) arranged at a reciprocal distance much smaller with respect to the size of said area (17) to be controlled, wherein said two visual means (25a, 25b) send the images they have taken to a processing unit which performs, in any order whatsoever, at least the following steps:
a) recognizing whether the object filmed by said visual recording means (15) inside said area (17) is stationary or moving;
b) verifying whether the size of the object is greater than a minimum value;
c) verifying whether the object is moving inside two adjacent zones (17a, 17b) into which said area (17) is divided;
d) determining whether the speed of movement of the object, in relation to the speed at which the image is captured, is inside a pre-set range of values;
e) determining whether the direction of movement of the object is oriented from the outside towards the inside of said area (17).

10. Method as in claim 9, **characterized in that** said five steps are performed in sequential order from a) to e).

11. Method as in claim 9 or 10, **characterized in that** it provides, for each of said steps, to set a pre-established comparison threshold, and the passage to the subsequent step only if the result of said comparison is affirmative.

12. Method as in claim 11, **characterized in that** each of said thresholds is able to be modified according to specific operating situations.

13. Method as in any claim from 9 to 12 inclusive, **characterized in that** it provides to recognize and signal the incorrect functioning caused by one and/or another of the following situations:
- the visual recording means (15) has a dirty lens;
- there is a lack of light;
- the electric feed or signal cables are broken;
- the system is blocked.

14. Method as in any claim from 9 to 13 inclusive, **characterized in that** it provides to temporarily disconnect the system during interventions to replace or perform maintenance on the operating member (12).
